Europäisches Patentamt

European Patent Office

Office européen des brevets

(19)

(11) **EP 0 837 415 A1**

(12) **EUROPEAN PATENT APPLICATION**

(43) Date of publication:
22.04.1998 Bulletin 1998/17

(51) Int. Cl.⁶: $G06K\ 7/10$

(21) Application number: 96202857.7

(22) Date of filing: 14.10.1996

(84) Designated Contracting States:
AT BE CH DE DK ES FI FR GB GR IE IT LI LU MC NL PT SE
Designated Extension States:
AL LT LV SI

(71) Applicant:
OPTICON SENSORS EUROPE B.V.
2132 NG Hoofddorp (NL)

(72) Inventor: Peng, Ke-Ou
2612 KV Delft (NL)

(74) Representative:
de Bruijn, Leendert C. et al
Nederlandsch Octrooibureau
P.O. Box 29720
2502 LS Den Haag (NL)

(54) **Scanning system with radially directed, multiple-reading scanning units**

(57) Scanning system for scanning the outside surface of an object (Q) which, in use, drops through said scanning system along an optical axis (T), said system being provided with light generating means (1; 11; 21a, 21b, 21c; 41; 42a, 42b, 42c; 51, 53) for generating at least one light beam (B111, B112, B113) directed along a path of propagation towards said optical axis (T), detection means (9; 25; 44a, 44b, 44c) arranged to receive light scattered back by said object (Q) and to convert it into at least one electrical signal, wherein said light generating means (1; 11; 21a, 21b, 21c; 41; 42a, 42b, 42c; 51; 53) are arranged to generate a plurality of light beams (B111, B112, B113) directed along predetermined, non-coinciding paths of propagation which all substantially intersect said optical axis (T) and are stationary with respect to the scanning system.

fig-4

## Description

The present invention relates to a scanning system for scanning the outside surface of an object which, in use, drops through the scanning system along an optical axis, the system being provided with light generating means for generating at least one light beam directed along a path of propagation towards the optical axis, detection means arranged to receive light scattered back by the object and to convert it into at least one electrical signal.

Such a scanning system has been described in European patent application 95201841.4, filed by the Applicant of the present patent application and which forms prior art under Article 54(3) EPC. In the scanning systems described in said European patent application, a light beam is swept by a rotating polygon or by rotating mirrors in order to produce one or more scanning lines on an object which, in use, drops through the scanning system. These scanning lines are projected to the area where e.g. a bar code is expected to occur. Scanning lines may be produced from various directions.

A disadvantage of the systems described in said European patent application is that the length of bar codes to be read are restricted by the length of the scanning lines produced.

The present invention is based on the insight that, if a bar code to be read is located substantially parallel to the optical axis of a scanning system as defined above, it is not necessary to produce scanning lines. It is sufficient to produce scanning points since the object itself is moving relative to the scanning point when it drops through the scanning system.

Thus, the object of the present invention is to present a scanning system in which bar codes (or other codes to be detected) which move substantially parallel to the optical axis of the scanning system are scanned by means of a plurality of scanning points produced by a plurality of scanning beams which are stationary with respect to the scanning system.

The object of the present invention is obtained by a scanning system according to the preamble of claim 1, which is characterized in that said light generating means are arranged to generate a plurality of light beams directed along predetermined, non-coinciding paths of propagation which all substantially intersect said optical axis and are stationary with respect to the scanning system.

There are two different ways of producing such non-coinciding paths of propagation. In a first embodiment according to the invention said predetermined non-coinciding paths of propagation intersect the optical axis in non-coinciding points of intersection, subsequent points of intersection being separated by at least a predetermined minimum distance. The minimum distance may be equal to or larger than the length of the object intended to be scanned.

Preferably, in the first embodiment, the detection means are provided with as many detectors as there are light beams for producing electrical signals which, in use, are subsequently analyzed in a time-division way in according with an expected dropping speed of the object to be scanned.

In a second embodiment according to the invention the predetermined, non-coinciding paths of propagation intersect the optical axis substantially in a common point of intersection. Preferably, the non-coinciding paths of propagation are within one single plane perpendicular to the optical axis.

The second embodiment of the present invention may be realized in several different ways. For instance, the light generating means may comprise a plurality of light sources each arranged for generating one of the plurality of light beams, the plurality of light sources being coupled to synchronizing means arranged to subsequently activate the plurality of light sources in a time-division way.

In an alternative arrangement of the second embodiment, the light generating means comprise one light source and a plurality of optical guiding means arranged for receiving light generated by the light source and each being arranged for producing one of the plurality of light beams.

In still a further alternative arrangement of the second embodiment, which may also be used to realize the first embodiment, the light generating means comprise one light source and a holographic beam splitter arranged to receive light generated by a light source and to produce a plurality of input light beams, a deflector provided with an opening through which the optical axis passes and arranged for receiving and deflecting the input light beams, a set of deflectors arranged to receive the input light beams after deflection by the deflector and, thus, to produce the plurality of light beams.

Both in the first and the second embodiment, the light generating means may comprise a plurality of light sources and the detecting means may comprise a plurality of detectors, as many as there are light sources, any one of the plurality of light sources being assembled together with one of the plurality of detectors in a wand-type scanning unit.

Wand-type scanning units have been described in European patent applications 94202705.3 and 95202098.0. These wand-type scanning units presented there may be used in the scanning system according to the present invention. However, any wand-type scanning unit according to the prior art may be used instead.

In both the first and the second embodiment according to the present invention, the scanning system may be designed for scanning a bar code on a cylindrical object with diameter d, the bar code having a predetermined width W, wherein adjacent ones of projections of the plurality of light beams on a plane perpendicular to the optical axis intersect one another with an angle smaller than 2W/d radians. If in such an arrangement the reading units are located as a ring-shaped array around the optical axis and their number is high enough to complete an entire circle, such a bar code will always be read by at least one of the reading units. In the present invention it is enough to use only one decoder. This reduces costs and dimensions of the scanning system. Since either the light beams illuminating the object are used in a time-division way or the electrical signals derived from the detection means are processed in a time-division way, separate buffer units may be used to buffer electrical signals related to different ones of the plurality of light beams. These buffer units are connected to one decoder which is arranged to read out the separate buffer units and to recognize a bar code among the contents of the buffer units in a way known to persons skilled in the art.

The present invention will be illustrated with reference to several drawings which are intended to illustrate the present invention and not to limit its scope.

Figure 1 schematically shows an object of cylindrical shape, which is provided with a bar code to be read;

Figure 2a schematically shows a scanning system with three reading units for detecting the bar code on the object shown in figure 1;

Figure 2b shows a top view of the three reading units of the arrangement according to figure 2a;

Figure 2c shows a wand-type scanner known from the prior art;

Figure 2d shows an alternative wand-type scanner that may be used in the arrangement according to the present invention;

Figure 3a schematically shows objects to be detected and related scanning time-diagrams;

Figure 3b schematically shows electrical signals derived from the object shown in figure 3a;

Figure 4 schematically shows an alternative arrangement for a scanning system in accordance with the present invention;

Figure 5 shows a further alternative scanning system in accordance with the present invention;

Figures 6a and 6c schematically show a still further embodiment of a scanning system according to the present invention;

Figure 6b schematically shows an arrangement for the production of a holographic beam splitter used in the arrangement according to figure 6a.

A first embodiment of a scanning system according to the invention is shown in figure 2a. Three reading units 111, 112, and 113 are located around an optical axis T of the scanning system. The three reading units 111, 112, and 113 may, e.g., be arranged in a symmetrical arrangement, as shown in the top view of figure 2b.

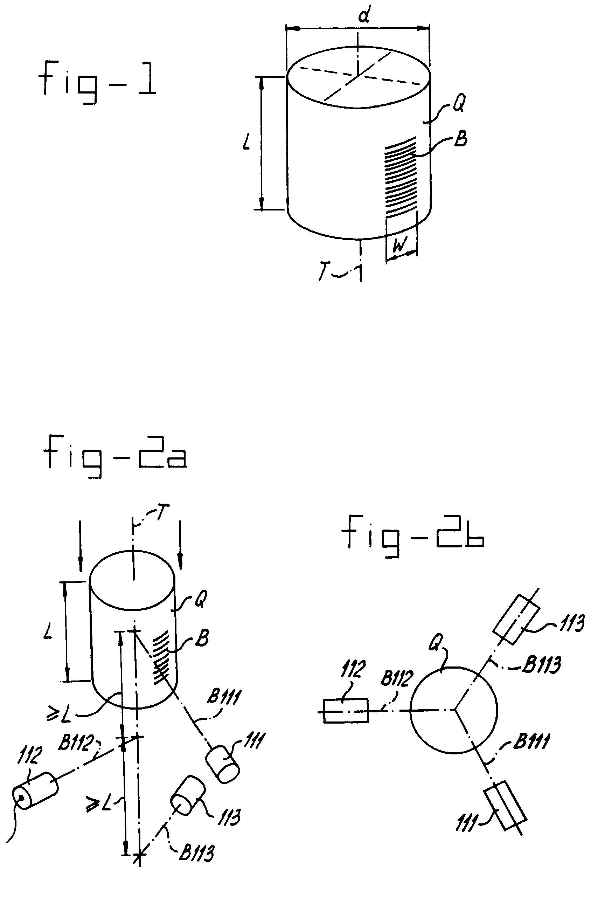

Any of the reading units 111, 112, and 113 direct a scanning beam B111, B112, and B113, respectively, to the optical axis T. The angle between adjacent projections of the scanning beams 111, 112, and 113 on a plane perpendicular to optical axis T needs to be less than 2W/d radians, W being the width of the bar code B and d being the diameter of the object Q to be scanned, as defined in figure 1. Only then, it is sure that when the object Q on which the bar code B is printed, passes through the scanning system substantially along the optical axis T, one of the reading units 111, 112, or 113 is able to read the bar code B.

The distances between subsequent points of intersection of the beams B111, B112, and B113, respectively, with the optical axis T is larger than the length L of the object Q. Then, the object Q can never be read by more than one of the reading units 111, 112, and 113.

Figure 2c shows an embodiment of a reading unit, say 111, which may be used in the scanning system according to the present invention, as shown in figure 2a. A reading unit of the type shown in figure 2c is known from European patent application 94202705.3, assigned to the applicant of the present patent. A light beam A emitted by a light source 1 is focused by a lens 3 to the bar code B through a window 4. The illuminated bar code B is imaged by a lens 5 with a diaphragm 13 through a relatively small hole 8 in an opaque screen 7 on a photo-sensor 9. The photo-sensor 9 converts the light signal into an electrical signal. The photo-sensor 9 is connected to suitable electronics (not shown in figure 2c) arranged to evaluate the electrical signal generated by the photo-sensor 9.

In the optics shown in figure 2c, the lens 3 is provided with a larger aperture than the lens 5. Consequently, the beam directed by the lens 3 to the bar code B is focused with a large angle with respect to the optical axis of the reading unit 111. In the arrangement shown in figure 2c, the depth of field mainly depends on the imaging optics, i.e. the lens 5 and the opaque screen 7. The resolution depends on the size of the small hole 8 in the opaque screen 7.

For the purpose of the present invention, the optics shown in figure 2c can be used in an opposite way: the light source 1 and the photo-sensor 9 may be interchanged with respect to their locations. Such an arrangement is shown in figure 2d. In the arrangement according to figure 2d a light module 11, comprising a light source and suitable focusing optics, is located within the lens 3. The light module 11 produces a small light point P on the bar code B. The light scattered back from the bar code B is collected by the lens 3 and directed to the photo-sensor 9, located at the other side of the lens 3 than is the window 4 in front of which the bar code B is to be detected.

In the reading optics shown in figure 2d, the depth of field and the resolution depend mainly on the light beam emitted by the light module 11. To obtain a larger depth of field and a high spatial resolution, it is preferred to use a laser light source within the light module 11.

It is noted that the reading optics for the reading units shown in figures 2c and 2d can be easily designed.

Since subsequent points of intersection between the beams B111, B112, B113 and the optical axis T in the arrangement according to figure 2a have a distance larger than the length L of the object Q, in the arrangement according to figure 2a reading signals generated by the reading units 111, 112, and 113 will automatically be separated in the time-domain. Any interference is excluded by the physical arrangement of the reading units 111, 112, and 113. Therefore, a single photo-electronic circuit (not shown) can be used for processing the electrical output signals of these reading units.

In the reading units shown in figures 2c and 2d, the photo-sensor 9 may be replaced by an optical fibre. Then, any of the reading units 111, 112, and 113 may be provided with their own optical fibres. Light scattered back by the object Q will be lead by these different fibres of the reading units 111, 112, and 113 to a single photo-sensor.

In the same way, in the reading units shown in figures 2c and 2d the light source 1 and 11, respectively, may be replaced by a optical fibre. Then, these latter fibres of the reading units 111, 112, 113, may lead to a single light source which provides the light beam for any of the reading units 111, 112, and 113. The arrangement according to figure 2a is the simplest and cheapest way to locate reading units 111, 112, 113 around the object Q to be scanned. The reading units 111, 112, 113, the number of which is of course not restricted to 3, are arranged at various axial positions such that in a defined time period only one of the reading units 111, 112, 113 can read the object Q. Binary signals generated by the photo-sensors of the reading units 111, 112, 113 are one by one fed to a decoder in time-series. The length of the bar code B to be scanned in the scanning system according to figure 2a is then restricted by the defined time period. The smaller the width W of the bar code B to be scanned, the more reading units 111, 112, 113 are needed and the longer the dimension of the scanning system in the axial direction.

The length of the scanning system according to figure 2a along the optical axis T depends also on the length L of the object O to be scanned. Assume that the object Q is a bottle of beer having a diameter d = 66 mm and a length L = 120 mm. Then, when the width of the bar code W = 24 mm, at least 9 reading points are needed and the length of the scanning system will be about 1 m. Such a length may be inconvenient.

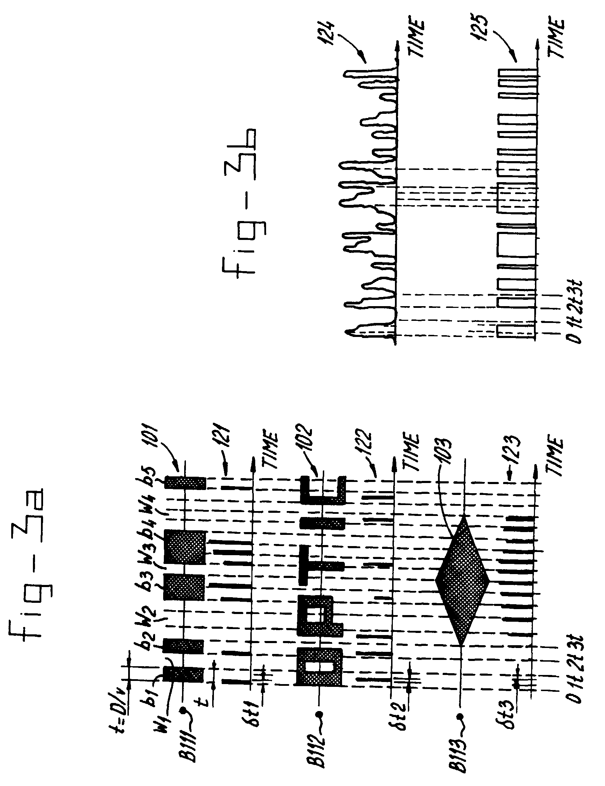

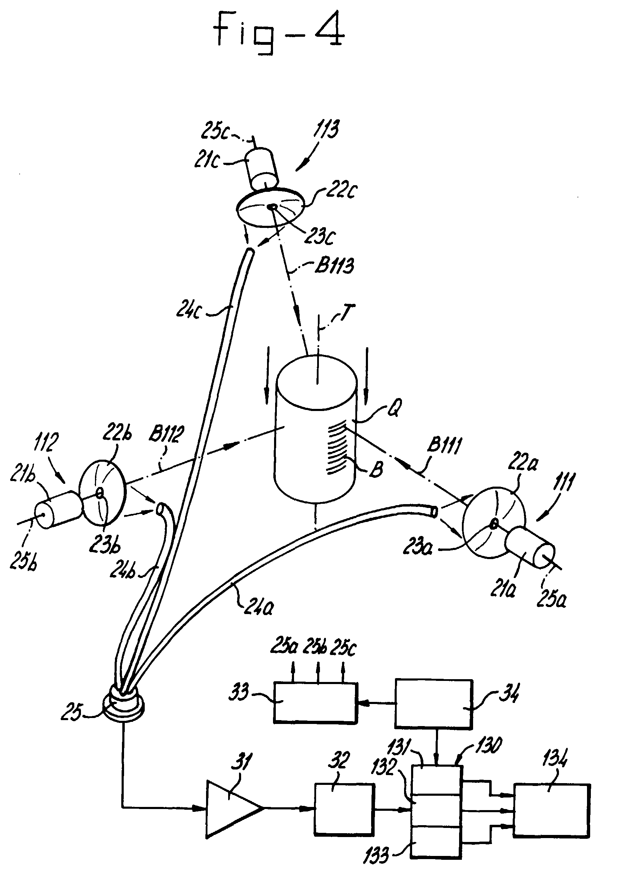

Therefore, in the embodiments according to figures 4, 5, and 6 alternative arrangements of the reading units 111, 112, and 113 are shown resulting in a less length of the scanning system. Before describing these further embodiments, first of all the principle of combining and separating electrical signals generated by several photo-sensors, will be described.

Each reading unit 111, 112, 113 must detect the object Q with the bar code B with a relatively high speed such, that a white or black bar of minimum width can be read by at least one of the reading units 111, 112, 113. The black/white bars in bar code B are measured relative to their "module", i.e. the minimum width. To read the bar code B, this minimum width has to be measured. During a measurement, the time needed by a black/white bar of minimum width to pass the reading point generated by any of the reading units 111, 112, 113 represents this width. This time is called the "module of time" for this barcode B. Since the bar code may appear at any angular position it has to be read by an array of reading units 111, 112, 113 arranged such that they cannot miss the bar code B. To give the opportunity for at least one of the reading units 111, 112, 113 to find and measure the black/white bars, all of the reading units 111, 112, 113 must have completed at least one measurement within such a module of time. In other words, the actual measurement time for any of the reading points generated by the reading units 111, 112, 113 is a portion of this module of time, which portion depends on the number of reading points.

In order to allow a correct scanning, the measurement time for any of the reading units 111, 112, 113 must match the moment at which the black/white bar of the bar code passes the reading point of the reading unit concerned. For instance, an error will occur when the white/black bar passes a reading point at the moment the measurement for this point ends. Therefore, more measurements for any of the reading units 111, 112, 113 are preferred during a module of time to detect any of the black/white bars of a bar code B. During any module of time, any of the reading units 111, 112, 113 must be able to detect at least once a black/white bar passing the reading point of the reading unit concerned. The higher the measurement frequency, the more times any of the reading units 111, 112, 113 are able to detect a black/white bar passing the respective reading point. In order to avoid any interference of the electrical signals generated by the reading units 111, 112, 113 the technique of time-division is used. After detecting and digitizing, one binary signal can be formed as a time-series signal produced by adding the output signals of the reading units 111, 112, 113.

When object Q is held stationary at a distance h above the scanning system and then drops through the scanning system, the speed v of the object Q in the scanning system is determined by:

$$v = \sqrt{(2Gh)}$$

where:

G is the gravity acceleration.

For instance, assume that h = 250 mm, then when the object Q drops through the scanning system, the speed of the object Q will be about 2.2 m per second. If the minimum width of the black/white bars of the bar code is equal to 0.1 mm the time needed to read any one of the black/white bars of minimum width of the bar code B is 45.2 microseconds. In the case that this minimum width is read by, for instance, 10 reading units each arranged to read any of these bars 5 times, 50 pulses are needed and the clock period must be 0.9 microsecond, which corresponds to a frequency of 1.1 MHz. Since such a frequency can be easily realized the technique of time-division is practical.

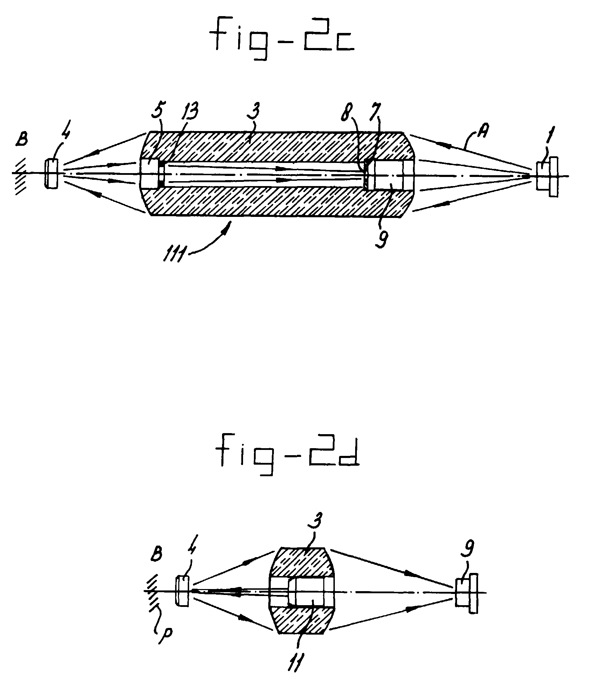

The technique of time-division in the present invention will be further illustrated with reference to figures 3a en 3b.

Figure 3a shows three different black and white patterns at different angular locations on the surface of cylindrical object Q, in an unrolled view. At the top of figure 3a a bar code 101 is shown, in the middle of figure 3a the word "optic" 102 is shown and at the bottom of figure 3a a pattern in the form of a diamond 103 is shown.

It is assumed that object Q is surrounded by N = 3 reading units 111, 112, and 113. Moreover, it is assumed that the beam B111 of reading unit 111 scans the bar code 101, the beam B112 of the reading unit 112 scans the word "optic", and the beam B113 of the reading unit 113 scans the pattern of the diamond form 103 when the object Q drops through the scanning unit. Furthermore, it is assumed that the beams B111, B112, and B113 are all substantially within one and the same plane.

The minimum width of any of the white or black bars of the bar code 101 is DT. Bar code 101 in figure 3a contains black bars B1, B2, B3, B4, and B5 having widths of DT, DT, 2DT, 3DT, and DT, respectively. Moreover, bar code 101 contains white bars W1, W2, W3, and W4 having widths DT, 3DT, DT, and 4DT, respectively.

In order to be able to detect the bar code 101, any black/white bar having a minimum width of DT, i.e. one module, has to be resolved. When the bar code 101 passes reading unit 111, for instance, with speed v the module of time t needed to detect a bar of minimum width is $t = DT/v$. Since this bar of minimum width can appear at any angular location on the surface of object Q, any of the beams B111, B112, B113 must be able to detect the presence of such a bar of minimum width. Therefore, during the module of time t, any of the reading units 111, 112, 113, must be allowed to find and read such a bar of minimum width. Consequently, the reading time $\delta t$ needed for any reading unit in the technique of time-division to read the bars of the bar code cannot be more than t/N (N being the number of reading units).

As shown in figure 3a, any of the modules of time t is separated into sub parts $\delta t1$, $\delta t2$, and $\delta t3$ corresponding to the time periods for reading by the reading units 111, 112, and 113 respectively.

Note, that only beam B111 will scan the bar code 101, whereas beam B112 will scan the word "optic", and beam B113 will scan the diamond form 103. Consequently, only the measurement made by B111 during its measurement time $\delta t1$ is related to the bar code 101.

In figure 3a the situation as shown in which any of the bars with minimum width DT is read once by beam B111, i.e., during the time $\delta t1$. However, the reading frequency can be increased such that beam B111 is able to read the bar with minimum width DT m times. Then the measurement time for each of the reading units 111, 112, 113 is decreased to $\delta t/m = DT/(vNm)$. The total measurement time for any of the reading units 111, 112, 113, then, equals the sum of the measurements during m cycles in a module of time t, which represents the time of the bar with minimum width. The reading frequency is then mNv/DT.

Assume that the signal level corresponding to white bars is zero, the signal level corresponding to black bars is one, there are only three reading units 111, 112, 113, and any bar of minimum width of bar code 101 is measured by one of the reading units 111, 112, 113 once (i.e. m = 1). As shown in figure 3a beam B111 reads during time period $\delta t1$, beam B112 reads during time period $\delta t2$, and beam B113 reads during time period $\delta t3$, which time periods succeed one another within the module of time t.

During time period $\delta t1$ beam B111 detects a portion of black bar B1, then, during time period $\delta t2$, beam B112 detects a black portion of the letter "O", and, at last, during time period $\delta t3$ beam B113 detects a white level.

In the time period between t and 2t each of the beams B111, B112, and B113 successively detect white levels. Afterwards, the reading by beams B111, B112, and B113 continues in the same time-division way as during time periods 0-t and t-2t.

The back-scattered signals relating to the beams B111, B112, and B113, respectively, are indicated with reference numbers 121, 122, and 123, respectively in figure 3a. Since the signals 121, 122, 123 are separated in a time-division way, they can be added to one another without interfering one another.

Figure 3b shows a signal 124 which corresponds to the addition of the signals 121, 122, and 123. Signal 124 will be converted into a binary signal 125, also indicated in figure 3b below signal 124. Thus, signal 125 contains any of the signals resulting from scanning by any of the beams B111, B112, and B113.

The binary signal 125 may be fed to a buffer 130 with buffer units 131, 132, 133 which is shown in figure 4. By separating the measurements made during the time periods $\delta t1$, $\delta t2$, and $\delta t3$ in any module of time t, the measured signal can be separated into signals related to the bar code 101, the word "optic" 102, and the diamond form 103. After separating, these different signals can be stored in the buffer units 131, 132, and 133, respectively. A decoder 134 having inputs connected to any of the buffer units 131, 132, and 133 (see figure 4) recognizes the bar code signal present in buffer 131.

Theoretically, detecting the bar code 101 may be achieved by detecting once per module of time t (i.e. m = 1). However, the white/black bars need not pass the reading unit at the beginning of a time period δt and, possibly, a measurement starts at a moment that the white/black bar almost leaves any of the beams B111, B112, B113. This may lead to errors. Consequently, in order to increase the chance of a correct detection of the bar code 101, preferably m ≥ 2.

Based on the technique described with reference to figures 3a and 3b, some further embodiments will be illustrated with reference to figures 4, 5, and 6.

In the embodiment according to figure 4, the reading unit 111 is provided with a light source 21a connected to a cable 25a, a collector 22a, and an optical fibre 24a. The light source 21a, which is preferably a laser source, generates scanning beam B111, which is directed to the optical axis T along which the object Q drops during operation. The beam B111 is directed through a small hole 23a in the collector 22a before impinging on the object Q. The light scattered back from the object Q is collected by the light collector 22a and directed to the end of the optical fibre 24a. The light received by the optical fibre 24a is led to a photo-sensor 25, as indicated in the bottom-left part of figure 4.

The reading units 112 and 113 are provided with similar components 21b-25b and 21c-25c as reading unit 111, as indicated in figure 4. Since the functioning of the components of the reading units 112 and 113 is the same as of equivalent components of reading unit 111, they will not be repeated in detail.

Beams B112 and B113 generated by reading units 112 and 113, respectively, are also directed to the optical axis T. Beams B111, B112, and B113 substantially intersect one another in a common point of intersection on optical axis T. Moreover, it is preferred that the beams B111, B112, and B113 propagate substantially within one single plane perpendicular to optical axis T.

As indicated in figure 4 any of the optical fibres 24a, 24b, and 24c have end parts arriving at photo-sensor 25 for directing received optical signals to the photo-sensor 25.

Cables 25a, 25b, and 25c are connected to an array of switches 33 connected to and controlled by a synchronizer 34. The synchronizer 34 is arranged to control the array of switches 33 such that the light sources 21a, 21b, and 21c are energized in a time-division way such that beam B111 is only present during δt1, beam B112 is only present during δt2, and beam B113 is only present during δt3 (see figure 3a).

Thus, the photo-sensor 25 receives optical signals through optical fibres 24a, 24b, and 24c in a time-division way, which optical signals do not overlap in time. The optical signal received by photo-sensor 25 is converted into one electrical signal. An amplifier 31 is connected to the output of the photo-sensor 25 to amplify the electrical signal. A digitizer 32 is connected to the output of the amplifier 31 to digitize the electrical signal amplified by amplifier 31. The output of digitizer 32 is fed to the buffer 130 comprising three buffers 131, 132, and 133. The buffer 130 is controlled by the synchronizer 34 such, that buffer 131 buffers the electrical signals related to the beam B111, buffer 132 buffers signals related to beam B112, and buffer 133 buffers signals related to beam B113. One single decoder 134 is connected to the buffers 131, 132, and 133 and is arranged to decode their contents and to detect bar code 101.

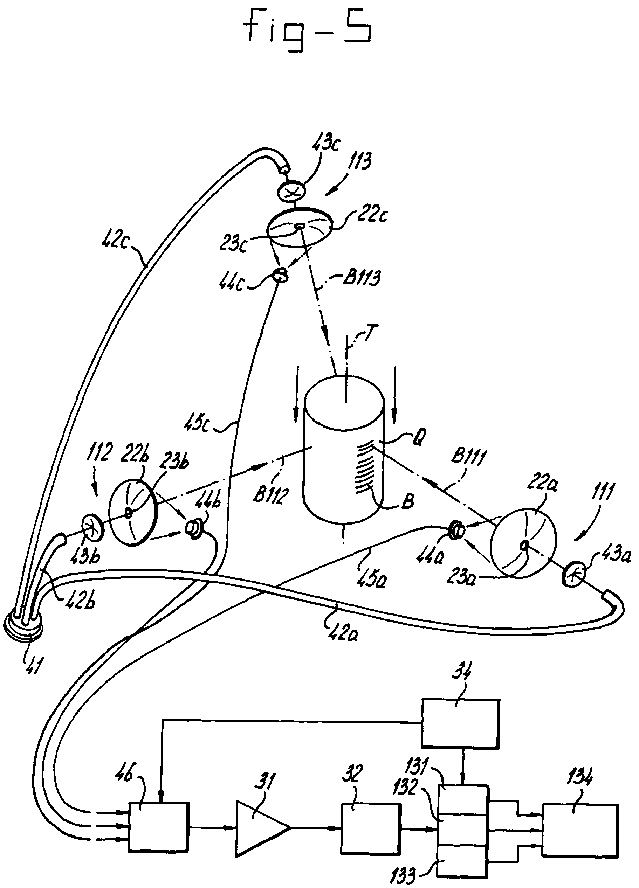

In a further embodiment, shown in figure 5, only a single light source 41 is used. This light source 41 generates light, portions of which are received by optical fibres 42a, 42b, and 42c. The optical fibres 42a, 42b, and 42c lead light beams to the respective reading units 111, 112, and 113. The optical fibres 42a, 42b, and 42c have respective end faces arranged to emit respective light beams B111, B112, and B113. These light beams B111, B112, and B113 after being focused by respective focusing optics 43a, 43b, and 43c propagate through a hole 23a, 23b, and 23c, respectively, in light collectors 22a, 22b, and 22c, respectively, to the side surface of the object Q. Light scattered back from the object Q is collected by the light collectors 22a, 22b, and 22c, and focused to detectors 44a, 44b, and 44c, respectively. Detectors 44a, 44b, and 44c convert the optical signals received into electrical signals which contain information about object Q. Detectors 44a, 44b, and 44c are connected to respective inputs of gating means 46 by cables 45a, 45b, and 45c, respectively. Amplifier 31 is connected to the output of the gating means 46 and digitizer 32 is connected to the output of the amplifier 31. Like in the arrangement according to figure 4, a buffer 130, comprising buffer units 131, 132, and 133, is connected to the output of the digitizer 32, whereas outputs of the buffer units 131, 132, and 133 are connected to decoder 134. Synchronizer 34 is connected to buffer 130 and also to the gating means 46.

Synchronizer 34 controls gating means 46 and buffer 130 such that electrical signals present on the cables 45a, 45b, and 45c are subsequently, in a time-division way, passed to subsequent buffer units 131, 132, and 133. The frequency of passing said electrical signals to the buffer units 131, 132, and 133 is such high that each module of bar code B can be read out at least once by at least one of the reading units 111, 112, 113.

Since the electrical signals generated by the detectors 44a, 44b, and 44c are read out in a time-division way, only one amplifier 31 and one digitizer 32 are needed.

Decoder 134, like in the arrangement according to figure 4, will read out the buffer units 131, 132, and 133 subsequently and evaluate their contents in a way known to the person skilled in the art.

When the electrical signals generated by the detectors 44a, 44b, and 44c are weak pre-amplifiers (not shown) may be used to amplify them.

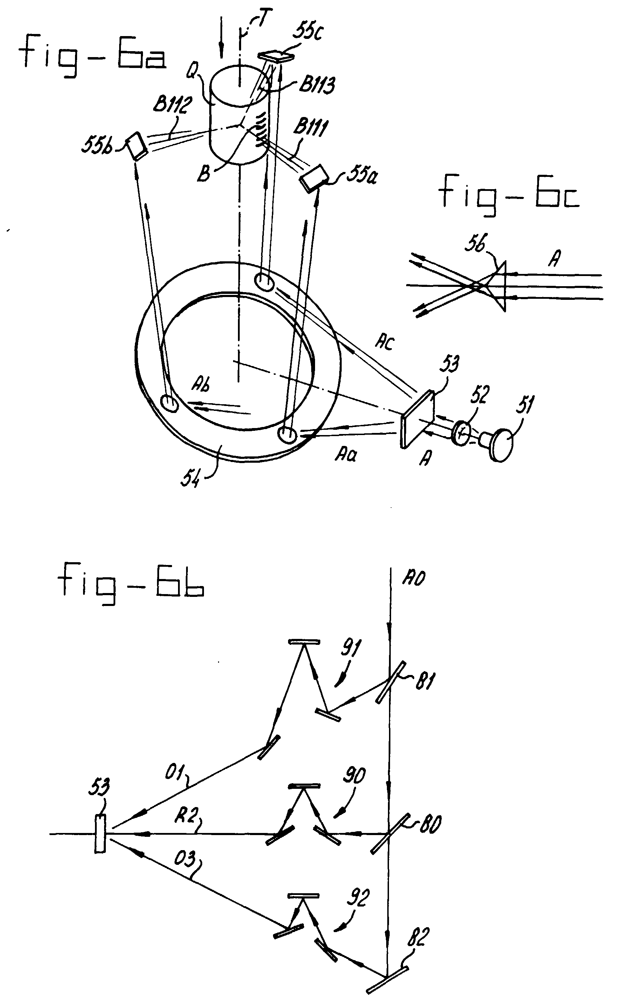

Figure 6a shows a still further embodiment of a scanning system according to the invention. In the scanning system shown in figure 6a one single light source 51, preferably a laser diode, is used to generate a light beam A. The light beam A is directed to an optical element 52 which collimates the beam A. The collimated beam A is directed to a holographic beam splitter 53, which separates beam A into a plurality of beams Aa, Ab, and Ac. Although three beams Aa, Ab, and Ac are shown, of course the number may be different.

A ring-shaped reflector 54 receives the beams Aa, Ab, and Ac and deflects them to three deflectors 55a, 55b, and 55c. The deflectors 55a, 55b, and 55c are constructed such that they produce beams B111, B112, and B113 as in the embodiments according to figures 4 and 5.

Reflector 54 need not be ring-shaped, however, it must be provided with an opening intersected by the optical axis T along which the object Q is intended to drop during operation.

Beams Aa, Ab, and Ac need not be produced by a holographic beam splitter, but may be produced by separate light sources or in any other way known to a person skilled in the art. For instance, an array of mirrors with various ratios of reflectance and transmittance may be used instead. An incident beam, in such an arrangement, is split by a first mirror into two parts, one of which is further split by a following mirror into further two parts and so on. In such an arrangement, the last mirror may be entirely reflective.

Instead of the holographic beam splitter 53 a prism can be used as a beam splitter, as is schematically indicated in figure 6c. The prism 56 is arranged to receive the light beam A and to split it into two different parts propagating in different directions.

For the sake of simplification, in figure 6a no light collectors and detectors are shown. However, as will be clear to persons skilled in the art, light collectors 22a, 22b, 22c, detectors 44a, 44b, 44c, and evaluation means indicated in figure 5 with reference numbers 46, 31, 32, 130, 134, and 34, may be used in the arrangement according to figure 6a.

Figure 6b shows one example of an arrangement for producing a holographic beam splitter 53. A coherent beam A0 produced by a laser source (not shown) is separated by beam splitters 81, 80, and 82.

Beam splitter 81 directs a beam to a mirror set 91 which produces an object beam O1.

Beam splitter 80 directs a beam to a mirror set 90 which produces a reference beam R1.

Beam splitter 82 directs a beam to a mirror set 92 which produces an object beam O2.

Object beams O1, O2, and reference beam R illuminate hologram 53.

Mirror sets 90, 91, and 92 are arranged such that the lengths of the optical paths travelled by beams O1, O2, and reference beam R1 between the laser source (not shown) and hologram 53 are substantially the same.

Reference beam R1 is orientated and located substantially the same as is beam A in the arrangement according to figure 6a. The other beams O1, O2 are the object beams and are directed towards hologram 53 in substantially the same way as are beams Aa, Ab, Ac in the arrangement according to figure 6a. (Of course, if three beams Aa, Ab, and Ac are used, in the arrangement according to figure 6b a third object beam O3, not shown, needs to be produced).

After exposure and processing, hologram 53 can be used as holographic beam splitter 53 in the arrangement according to figure 6a.

Since in the arrangement according to figure 6a, the object Q when dropping along optical axis T will interrupt probably at least one of the beams Aa, Ab, and Ac when passing through the opening in the reflector 54, the scanning of bar code B must have been completed before object Q reaches the opening in reflector 54. Therefore, the length of object Q to be read is restricted by the distance between the deflectors 55a, 55b, 55c, and the reflector 54.

In the description given above only a few embodiments have been presented for illustrating the present invention. Alternative embodiments may be constructed without leaving the scope of the invention which is only restricted by the claims.

For instance, in the embodiment shown in figures 4 and 5, in which beams B111, B112, and B113 intersect one another in a common point located on optical axis T, the reading units 111, 112, and 113 may be substituted by wand-type scanning units as shown in figures 2c and 2d. Also other wand-type scanning units, known from the prior art, may be used. Then, evaluation electronics as shown in figure 5 may be used to evaluate the electrical signals produced by such wand-type scanning units. Alternatively, such wand-type scanning units may be energized subsequently, like the light sources 21a, 21b, 21c in figure 4, and evaluation electronics as shown in figure 4 may be used.

In the arrangement according to figure 5, it is not strictly necessary to illuminate the object Q through optical fibres 42a, 42b, and 42c. Instead, conventional light sources may be used to illuminate the side surface of object Q.

In the arrangement according to figure 2a, reading units 111, 112, and 113 may be constructed as the reading units 111, 112, and 113 shown in either figure 4 or figure 5. Even the arrangement according to figure 6a, may be amended to render an arrangement according to figure 2a, i.e. the deflectors 55a, 55b, and 55c may be arranged such that they produce the beams B111, B112, and B113 as illustrated in figure 2a.

**Claims**

1.   Scanning system for scanning the outside surface of an object (Q) which, in use, drops through said scanning system along an optical axis (T), said system being provided with light generating means (1; 11; 21a, 21b, 21c; 41; 42a, 42b, 42c; 51, 53) for generating at least one light beam (B111, B112, B113) directed along a path of propagation towards said optical axis (T), detection means (9; 25; 44a, 44b, 44c) arranged to receive light scattered back by said object (Q) and to convert it into at least one electrical signal, characterized in that said light generating means (1; 11; 21a, 21b, 21c; 41; 42a, 42b, 42c; 51; 53) are arranged to generate a plurality of light beams (B111, B112, B113) directed along predetermined, non-coinciding paths of propagation which all substantially intersect said optical axis (T) and are stationary with respect to the scanning system.

2. Scanning system according to claim 1, wherein said predetermined non-coinciding paths of propagation intersect said optical axis (T) in non-coinciding points of intersection, subsequent points of intersection being separated by at least a predetermined minimum distance (L).

3. Scanning system according to claim 2, wherein said detection means are provided with as many detections (9) as there are light beams (B111, B112, B113) for producing electrical signals which, in use, are subsequently analyzed in a time-division way in accordance with an expected dropping speed of the object (Q) to be scanned.

4. Scanning system according to claim 1, wherein said predetermined, non-coinciding paths of propagation intersect said optical axis (T) substantially in a common point of intersection.

5. Scanning system according to claim 4, wherein said light generating means comprise a plurality of light sources (21a, 21b, 21c) each arranged for generating one of said plurality of light beams (B111, B112, B113), said plurality of light sources being coupled to synchronizing means (34) arranged to subsequently activate said plurality of light sources in a time-division way.

6. Scanning system according to claim 5, wherein said detection means (25) is coupled to buffer means (130) provided with a plurality of buffer units (131, 132, 133) coupled to said synchronizing means (34) and a decoder (134), said synchronising means (34) being arranged to control said buffer units to subsequently store subsequent parts of said electrical signal produced by said detection means (25) in synchronism with subsequent activation of said plurality of light sources.

7. Scanning system according to claim 4, wherein said light generating means comprise one light source (41) and a plurality of optical guiding means (42a, 42b, 42c) arranged for receiving light generated by said light source and each being arranged for producing one of said plurality of light beams (B111, B112, B113).

8. Scanning system according to claims 2 or 4, wherein said light generating means comprise one light source (51) and a holographic beam splitter (53) arranged to receive light generated by said light source and to produce a plurality of input light beams (Aa, Ab, Ac), a deflector (54) provided with an opening through which said optical axis (T) passes and arranged for receiving and deflecting said input light beams (Aa, Ab, Ac), a set of deflectors (55a, 55b, 55c) arranged to receive said input light beams after deflection by said deflector (54) and, thus, to produce said plurality of light beams (B111, B112, B113).

9. Scanning system according to claims 7 or 8, wherein said detection means comprise a plurality of detectors (44a, 44b, 44c) as many as there are light beams (B111, B112, B113), said scanning system furthermore being provided with gating means (46) having a plurality of inputs each of which being connected to one of said plurality of detectors, buffer means (130) provided with a plurality of buffer units (131, 132, 133) and coupled to said gating means (46), a decoder (134) coupled to said buffer units, and synchronizing means (34) coupled to both said gating means and said buffer means in order to control subsequent storing of parts of output signals of said plurality of detectors in subsequent ones of said plurality of buffer units, in a time-division way.

10. Scanning system according to any of the claims 1, 2 or 4, wherein said light generating means comprise a plurality of light sources and said detecting means comprise a plurality of detectors, as many as there are light sources, any one of said plurality of light sources (1; 11) being assembled together with one of said plurality of detectors (9) in a wand-type scanning unit (111, 112, 113).

11. Scanning system according to any of the preceding claims, being designed for scanning a bar code (B) on a cylindrical object (Q) with diameter d, said bar code (B) having a predetermined width W, wherein adjacent ones of projections of said plurality of light beams (B111, B112, B113) on a plane perpendicular to said optical axis (T) intersect one another with an angle smaller than 2W/d radians.

fig-1

fig-2a

fig-2b

# fig-2c

# fig-2d

fig-3a

fig-3b

EP 0 837 415 A1

# Fig-4

# Fig-5

fig-6a

fig-6c

fig-6b

**European Patent Office** | **EUROPEAN SEARCH REPORT** | **Application Number** EP 96 20 2857

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 5 448 363 A (HAGER HORST) 5 September 1995 | 1-7,9,11 | G06K7/10 |
| Y | * column 1, line 13 - line 31 * <br> * column 1, line 64 - column 2, line 17 * <br> * column 2, line 30 - line 40 * <br> * column 3, line 34 - column 5, line 29 * <br> * column 6, line 26 - line 53 * <br> --- | 8,10 | |
| Y | EP 0 461 673 A (NIPPON DENSO CO) 18 December 1991 <br> * column 9, line 24 - column 10, line 26 * <br> * column 11, line 35 - line 53 * <br> --- | 8 | |
| Y | EP 0 256 804 A (EMHART IND) 24 February 1988 <br> * column 4, line 63 - column 6, line 35 * <br> * figure 2A * <br> --- | 10 | |
| A | US 5 064 258 A (INOKUCHI TOSHIYUKI ET AL) 12 November 1991 <br> * column 9, line 18 - line 38 * <br> * figure 1 * <br> --- | 1,2,8 | |
| A | US 4 044 227 A (HOLM JAMES P ET AL) 23 August 1977 <br> * column 3, line 39 - column 4, line 16 * <br> * figure 1 * <br> --- | 1 | TECHNICAL FIELDS SEARCHED (Int.Cl.6) <br> G06K |
| A | EP 0 354 362 A (ELPATRONIC AG) 14 February 1990 <br> * column 5, line 13 - column 7, line 5 * <br> * figure 1 * <br> ----- | 1 | |

The present search report has been drawn up for all claims

| Place of search | Date of completion of the search | Examiner |
|---|---|---|
| THE HAGUE | 4 March 1997 | Goossens, A |